# EUROPÄISCHE PATENTSCHRIFT

(11) **EP 1 158 871 B1**
(45) Veröffentlichungstag und Bekanntmachung des Hinweises auf die Patenterteilung: **13.02.2008**
(21) Anmeldenummer: 00925107.5
(22) Anmeldetag: 09.03.2000
(51) Int. Cl.: A23L 1/211, A23J 1/14

(54) **VERFAHREN ZUR BEHANDLUNG UND VERARBEITUNG ALKALOID-, ÖL- UND PROTEINHALTIGER LUPINENSAMEN**
METHOD FOR TREATING AND PROCESSING LUPINE SEEDS CONTAINING ALKALOID, OIL AND PROTEIN
PROCEDE DE PREPARATION ET DE TRAITEMENT DE GRAINES DE LUPINS A BASE D'ALCALOIDES, D'HUILES ET DE PROTEINES

(30) Priorität: 17.03.1999 DE 19912037; 18.03.1999 DE 19912045
(43) Veröffentlichungstag der Anmeldung: 05.12.2001
(73) Patentinhaber: Fraunhofer-Gesellschaft zur Förderung der angewandten Forschung e.V., 80686 München (DE)
(72) Erfinder: HOLLEY, Wolfgang, D-84079 Bruckberg (DE); MÜLLER, Klaus, D-85356 Freising (DE); KAMAL, Hisham, D-85395 Attenkirchen (DE); WÄSCHE, Andreas, D-85416 Langenbach (DE); BORCHERDING, Axel, D-80937 München (DE); LUCK, Thomas, D-80992 München (DE)
(86) Internationale Anmeldenummer: PCT/EP2000/002069
(87) Internationale Veröffentlichungsnummer: WO 2000/054608

(56) Entgegenhaltungen:
- EP-A- 0 212 882
- EP-A- 0 441 672
- WO-A-83/00419
- WO-A-97/12524
- DE-A- 2 908 320
- TAHA F S ET AL: "Unconventional protein sources. I. Lupinus albus" AGRICULTURAL AND BIOLOGICAL CHEMISTRY,JP,JAPAN SOC. FOR BIOSCIENCE, BIOTECHNOLOGY AND AGROCHEM. TOKYO, Bd. 46, Nr. 11, 1982, Seiten 2625-2629, XP002092195 ISSN: 0002-1369
- HEIMANN M: "Flaking mill theory and operation" OIL MILL GAZETTEER,US,HOUSTON, TX, Bd. 101, Nr. 5, November 1995 (1995-11), Seiten 32-37, XP002093358 ISSN: 0030-1442
- SNYDER ET AL: "Soybean Utilization" US,NEW YORK, VAN NOSTRAND REINHOLD, 1987, Seiten 82-85, XP002092199
- SMITH A K ET AL: "Soybeans. chemistry and technology" SOYBEANS, CHEMISTRY AND TECHNOLOGY,US,WESTPORT, CONNECTICUT, AVI PUBL. COMP, Bd. 1, 1972, Seiten 97-98, XP002092198
- ORTIZ J G F ET AL: "Extraction of alkaloids and oil from bitter lupin seed" JOURNAL OF THE AMERICAN OIL CHEMISTS' SOCIETY,US,AMERICAN OIL CHEMISTS' SOCIETY. CHAMPAIGN, Bd. 59, Nr. 5, 1. Mai 1982 (1982-05-01), Seiten 241-244, XP002092196 ISSN: 0003-021X
- STAHL E ET AL: "Extraktion von Lupineöl mit überkritischem Kohlendioxid" FETTE, SEIFEN, ANSTRICHMITTEL,DE,INDUSTRIEVERLAG VON HERNHAUSSEN KG. HAMBURG, Bd. 83, Nr. 12, 1981, Seiten 472-474, XP002092197

## Beschreibung

### Technisches Gebiet

Die Erfindung bezieht sich auf ein Verfahren zur Behandlung und Verarbeitung alkaloid-, öl- und proteinhaltiger Lupinensamen zur Gewinnung von Produkten aus den Lupinensamen mittels gezielter Fraktionierung, wobei der zerkleinerte Lupinensamen mittels Eintrag eines Lösungsmittels entölt und der Rückstand unter Zusatz von Säure von im Sauren löslichen Stoffen, vorzugsweise von Alkaloiden, abgereichert wird.

### Stand der Technik

Proteine gelten als Rohstoffe für die Lebensmittel- und Futtermittelindustrie und finden vielfache Verwendung in der technischen Chemie, beispielsweise zur Herstellung von Klebstoffen, Emulsionen für photographische Schichten sowie Kosmetika, um nur einige zu nennen.

Da Proteine ein wesentlicher Bestandteil von Tieren und Pflanzen sind, stellen sie erneuerbare, native Rohstoffe dar, die im industriellen Maßstab beispielsweise aus Milch, Soja und Weizen gewonnen werden können. Von besonderer Bedeutung für die Proteingewinnung sind Lupinensamen, die in ihrer Zusammensetzung hinsichtlich Proteingehalt, Rohfaseranteil sowie Ölgehalt Sojabohnen ähneln. Der Lupinenanbau und die Verarbeitung von Lupinensamen zu gewünschten Proteinprodukten ist deshalb von besonderem Interesse, da Lupinen auch in Regionen angebaut werden können, die für Sojabohnen ungeeignet sind, wie beispielsweise in Westeuropa oder Australien.

Eine direkte Nutzung von Lupinenprodukten, insbesondere für Emährungszwecke, ist aufgrund pflanzeneigener Bitterstoffe, den sogenannten Alkaloiden, eingeschränkt, bei den anbautechnisch vorteilhaften sogenannten Bittertupinen sogar vollkommen ausgeschlossen. Bei der Verarbeitung von Lupinensamen ist es daher erforderlich, die Alkaloide zu entfernen, um Produkte für die Nutzung als Lebensmittel zu erhalten. Gleichzeitig können die extrahierten Alkaloide als Wirkstoffe gezielt in Landwirtschaft und Pharmazie eingesetzt werden, wodurch die vollständige Verwertung von Lupinen bzw. Bitterlupinen auch aus ökonomischer Sicht äußerst interessant ist.

So geht bereits aus der im Jahre 1931 veröffentlichten deutschen Patentschrift DE 537 265 ein Verfahren zur nutzbaren Verwertung von Lupinen unter Entbitterung durch stufenweise Extraktion mit wässrigen Lösungen hervor. Die Entbitterung wird mittels stufenweiser Extraktion im feuchten Zustand geschnitzelter Lupinen unter Säurezusatz mit anschließender Lösung der sich im Säurebad bildenden Salze durchgeführt.

Weiterhin geht aus der WO 83/00419 ein Verfahren und eine Vorrichtung zum Entzug der Bitterstoffe aus Bitterlupinensamen hervor, nachdem die Lupinen in feinstgemahlener Form mit unterschiedlich stark konzentrierten Lupinenextraktlösungen nach dem Gegenstromprinzip kalt ausgewaschen werden, wobei als Lösungsmittel Wasser verwendet wird.

Ein weiterentwickeltes Verfahren zur Entbitterung von Lupinensamen ist der WO 97/12524 zu entnehmen, das nach der Zerkleinerung der Lupinensamen auf grießartige Körner mit Durchmessern zwischen 200 und 600 µm zunächst eine thermische Wärmeeinwirkung auf die Pflanzensamen vorsieht, wodurch eine gezielte Inaktivierung von in den Pflanzensamen vorhandenen Enzymen erreicht wird. Die Wärmeeinwirkung erfolgt direkt mittels Blanchiertechnik, d.h. direktem Einbringen heißen Wasserdampfes in den zerkleinerten Samen. Nach dem Blanchiervorgang werden die Pflanzensamen einem aus zwei Schritten bestehenden Entbitterungsprozeß unterzogen, dessen erster Extraktionsschritt zur Abtrennung der Alkaloide sowie weiterer antinutritiver Stoffe führt. Hierzu werden die Pflanzensamen mit frischem Trinkwasser als Lösungsmittel in einem sauren Milieu im Rahmen einer Gegenstromextraktion vermischt. Der Mischvorgang kann vorzugsweise mehrstufig erfolgen, bis ein an antinutritiven Stoffen angereichertes Extrakt und ein extrahierbares Raffinat, das reich an Proteinen und Ballaststoffen ist, gewonnen wird. Das aus dem ersten Extraktionsschritt gewonnene Raffinat wird in einem zweiten Schritt mit Wasser als Lösungsmittel in einem alkalischen Milieu zugesetzt. Als Extraktionsergebnisse im zweiten Schritt wird ein an Ballaststoffen angereichertes Raffinat sowie eine mit Proteinen angereicherte Proteinmilch gewonnen.

Allen vorstehend beschriebenen Entbitterungsverfahren liegt ein gemeinsames Ziel zugrunde, nämlich zum einen die Gewinnung von Proteinen möglichst ein Reinstform und zum anderen möglichst vollständig entbitterte Ballaststoffe für die Lebensmittel-oder Futtermittelindustrie zu erhalten.

Den vorstehend beschriebenen Verfahren haften jedoch auch diverse Nachteile an: Zum einen weisen Pflanzensamen und insbesondere Lupinensamen einen Ölgehalt von ca. 10 bis 15 % auf, in dem neben reinem Öl, beispielsweise Triglyzerin auch lipophile Nebenbestandteile enthalten sind, wie beispielsweise Karotinoide, Lecithine oder lipophile Alkaloide. Insbesondere letztere Bestandteile können mit den bekannten Entbitterungsverfahren nur unzureichend extrahiert werden, so daß in den entbitterten Endprodukten unvermeidbar lipophile alkaloidische Restbestandteile enthalten sind.

Zwar sieht das bekannte Verfahren gemäß WO 97/12524 eine dem Entbitterungsprozeß vorgeschaltete Inaktivierung der in den Pflanzensamen vorhandenen Enzyme vor, so daß ausgeschlossen werden kann, daß bei der Lagerung der entbitterten Verfahrensprodukte eine enzymatische Oxidation vorhandener ungesättigter Fettsäuren stattfindet, die beispielsweise zu einem ranzigen Geschmack führen würden, was für eine Verwendung im Lebensmittelbereich unvorteilhaft wäre, doch wird die Inaktivierung mittels Blanchieren vorgenommen, d.h. einer Beaufschlagung der Pflanzensamen mit heißem Wasserdampf, wodurch zum einen zwar die Enzyme inaktiviert, jedoch auch Speicherproteine unvermeidbar in Mitleidenschaft gezogen werden, daß sie ihre native Form und Eigenschaften verlieren.

Schließlich trägt auch die Formgebung der zerkleinerten Lupinensamen am Erfolg des Entbitterungsprozesses bei. So ist die in der WO 97/12524 vorgeschlagene Grießkornform insofern von Nachteil, da sie ein verhältnismäßig großes Volumen umschließt, aus dem die zu extrahierenden Einzelbestandteile entfernt werden müssen, d.h. je größer der Abstand vom Volumeninneren zur Außenseite eines jeden Grießkomes ist, umso weniger leicht gelangen die zu extrahierenden Stoffe aus den zu entbitternden, grießförmigen Lupinensamenbestandteile. Andererseits wird in der WO 83/00419 vorgeschlagen, die zu entbittemden Lupinensamen zu feinstem Mehl zu mahlen, mit Korngrößen zwischen 1 µm bis 50 µm, wodurch zwar die einzelnen Extraktionswege innerhalb eines "Staubkornes" sehr klein gehalten sind, doch entstehen durch das feine Vermahlen der Lupinensamen zu Mehl verfahrenstechnische Probleme beim Auftrennen zwischen flüssiger und fester Phase. Dies erfordert komplizierte und verfahrenstechnisch aufwendige Filtrationsschritte, die im industriellen Einsatz einen erheblichen Kosten- und Zeitfaktor bedeuten.

Ein weiterer bekannter Entbitterungsprozeß ist in der DE-OS 29 08 320 beschrieben, bei dem die Lupinensamen zerkleinert und entölt werden. Der dabei auftretende proteinhaltige Rückstand wird nachfolgend erhitzt und unter Zugabe von Säure extrahiert. Auch bei diesem bekannten Verfahren sind die vorstehend genannten Nachteile, wie Eintrag von Wasser zur Inaktivierung von Enzymen oder unzureichende Zerkleinrung der Lupinensamen zu nennen.

Neben den vorstehend genannten Lupinen als Ausgangsstoffe kann auch protein-und öl- oder stärkehaltiges Saatgut verwendet werden, wie Raps, Leinsaat oder Leguminosen, insbesondere Sojabohnen, Erdnuß, Erbsen und Ackerbohnen.

### Darstellung der Erfindung

Die Aufgabe der Erfindung besteht darin, ein Verfahren zur Behandlung und Verarbeitung alkaloid-, öl- und proteinhaltiger Lupinensamen zur Gewinnung von Produkten aus Lupinensamen mittels gezielter Fraktionierung derart anzugeben, daß die Produkte, Proteine in Reinstform sowie Ballaststoffe möglichst vollständig von Bitterstoffen befreit werden können, wobei die nacheinander durchzuführenden Verfahrensschritte mit möglichst geringem technischen Aufwand verbunden sein sollen. Zum einen ist insbesondere darauf zu achten, daß die zu behandelnden Proteine in ihrer nativen Form unverändert verbleiben sollen, während in den Lupinensamen enthaltene Enzyme inaktiviert werden insbesondere lipophile Alkaloide weitgehendst vollständig, auf möglichst schonende Weise, extrahiert werden sollen. Das Verfahren soll mit möglichst einfachen, aufeinander abgestimmten Prozeßschritten den bisher erreichten Grad an Entbitterung von Lupinensamen erheblich verbessern, bzw. den technischen Aufwand bei gleichem Entbitterungsergebnis erheblich verringern.

Erfindungsgemäß werden bei dem Verfahren zur Behandlung und Verarbeitung alkaloid-, öl- und proteinhaltiger Lupinensamen zur Gewinnung von Produkten aus den Lupinensamen, die sowohl reich, den sogenannten Bitterlupinen, oder arm an Bitterstoffen sein können, mittels gezielter Fraktionierung folgende Verfahrensschritte durchgeführt:

Vorzugsweise werden die Lupinensamen zunächst geschält und die Schalen werden abgetrennt. Im Anschluß daran wird das Kernfleisch der Samen zu scheibchenförmigen Flocken zerkleinert bzw. verformt, indem sie bspw. durch eine Flockierwalze geführt werden. Die Flockierwalze wird gekühlt, wodurch der Zerkleinerungsvorgang effizienter und schonender für das zu zerkleinernde Saatgut erfolgt. Die Kühlung soll insbesondere eine Erwärmung des Saatgutes während der Zerkleinerung verhindern. Der Kühleffekt kann beispielsweise mit gewöhnlichem Leitungswasser sichergestellt werden, das das zerkleinerte Saatgut in einem Temperaturbereich noch unterhalb der Denaturierungstemperatur der Lupinenproteine hält. Geeignte Temperaturen bewegen sich zwischen 8 und 35°C. Anschließend erfolgt auf die Flocken ein indirekter Wärmeeintrag unter weitgehendem Ausschluß von Wasser. Die indirekte Erwärmung findet in einer Wärmepfanne statt, in die die zerkleinerten Flocken eingebracht werden. Durch den schonenden, indirekten Wärmeeintrag werden die in den Lupinensamen enthaltenen Enzyme inaktiviert, doch verbleiben die Proteine weitgehend in ihrer ursprünglichen Form und behalten ihre funktionellen Eigenschaften unverändert bei, da sie nicht in direktem Wasserkontakt treten, durch das die Proteine in ihren natürlichen Eigenschaften geschädigt würden.

Nun werden die Flocken gezielt einem Entölungsprozeß unterzogen, bei dem ein Lösemittel eingesetzt wird, vorzugsweise Hexan, mit dem eine Extraktion der in den scheibchenförmigen Flocken enthaltener Lipide möglich ist. Auch ist es möglich alternativ zu Hexan, Ethanol, technisches Hexan, Pentan, Heptan oder überkritisches CO₂ zu verwenden. Ebenso kann die Entölung mit vorstehenden Lösemitteln mit einer mechanischen Ölabtrennung in Form von Pressen oder mit einer Entölung mit Ethanol-Wasser-Gemischen unter Anwendung von Zentrifugaltechniken kombiniert werden.

Insbesondere betreffen die extrahierten Lipide auch sämtliche in den Lupinensamen enthaltenen lipophile Alkaloide, die im Wege der Entölung isoliert werden können, so daß in den hexannassen, scheibchenförmigen Flocken lediglich lipophobe Alkaloide als Bitterstoffe vorhanden sind, die es gilt, in einem nachfolgenden Entbitterungsprozeß zu extrahieren. Die auf die vorstehende Weise entölten und desolventisierten Flocken weisen vorzugsweise einen Ölgehalt auf, der kleiner 2%, vorzugsweise kleiner 1 % von der Trockensubstanz ist. Die Desolventisierung erfolgt vorzugsweise wasserfrei mit einem überhitzten Lösemittel, bspw. Hexan. Grundsätzlich sind jedoch auch beliebig andere Desolventisierungsmethoden anwendbar. Vorzugsweise wird das hexannasse Mehl schonend, beispielsweise mit über kritischen Hexan, entbenziniert.

Zur Entbitterung werden die entbenzinierten, lipidreduzierten, scheibchenförmigen Flocken einem wässrigen Fraktionierungsprozeß unterzogen. Auch ist es möglich zu den lipidreduzierten Flocken Anteile von Schalen zu mischen, die in einem vorgeschalteten Mahlschritt auf Korngrößen kleiner 5 mm reduziert worden sind. Der Entbitterungsprozeß setzt sich im Wesentlichen aus zwei Prozeßstufen zusammen:

Zunächst werden die entölten Flocken, gegebenenfalls zusammen mit Schalenanteilen, in ein wässrig saures Medium eingebracht, in dem sich all jene Substanzen lösen, die in den Flocken enthalten sind und im sauren Bereich gelöst werden können. Als Resultat wird ein wässrig saures Extrakt, das insbesondere die Alkaloide enthält, sowie ein sauer unlösliches, entbittertes Raffinat, im Wesentlichen bestehend aus Flockensubstanz, erhalten.

Die auf diese Weise extrahierten Flocken, die auch als Mehl bezeichnet werden, können einer weiteren, nachfolgenden Extraktion mit dem Ziel einer Gewinnung von Proteinisolaten bzw. -konzentraten unterzogen werden. Auch bei der nachfolgenden Extraktion sind wässrige Systeme involviert, die in mehreren Stufen hintereinander geschaltet werden können. Eine Trennung zwischen der festen und flüssigen Phase kann mit Hilfe der Dekantation erfolgen, mit der man als Produkt den Proteinextrakt sowie proteinabgereicherte bzw. deren Kompartimente erhält, wobei sich in der übrig gebliebenen Flockensubstanz der darin verbleibende Proteinanteil mit Hilfe bestimmter Verfahrensbedingungen, wie beispielsweise pH-Wert, Extraktionszeiten sowie Temperaturen, steuern läßt.

Auch ist es möglich ein Produkt aus dem wäßrigen sauren Extrakt zu erhalten, das im Rahmen einer Feinstoffabtrennung per Seperator gewonnen werden kann. Da der erste Verfahrensschritt mehrstufig in Art einer Kaskade ausgebildet ist, die eine Vielzahl hintereinander geschaltete wässrig saure Prozeßstufen vorsieht, wird die Feinstoffabtrennung frühestens nach Durchlauf der ersten Prozeßstufe vorgenommen. Hierbei wird in einer Prozeßsstufe zur Einstellung eines Verhältnisses zwischen sauerunlöslichem Raffinat und wäßrigem Extrakt von kleiner als 10:1 ein Teil des wäßrigen Extraktes der unmittelbar darauffolgenden Prozeßstufe zugemischt. Auch ist es möglich ein Verhältnis zwischen sauerunlöslichem Raffinat und wäßrigem Extrakt von größer als 10:1 einzustellen, indem innerhalb einer unmittelbar folgenden Prozeßstufe ein Teil des wäßrigen Extraktes ausgeschleust wird.

Das dabei erhältliche Produkt weist somit einen Trockensubstanzgehalt von wenigstens 12%, vorzugsweise größer 16%, einen Proteingehalt in der Trockensubstanz von größer 70%, vorzugsweise größer 85% und einen Alkaloidgehalt von kleiner 0,5% vorzugsweise 0,1 % in der Trockensubstanz auf. Ferner enthält das Produkt Ballaststoffe, die nach oder während einer Trocknungsphase nach Partikelgrößen in mindestens 2, vorzugsweise 3 Fraktionen fraktioniert werden.

Wird das sauerunlösliche Raffinat, das nach der ersten Verfahrensstufe erhalten wird, in ein wässrig alkalisches Medium eingebracht, in dem all jene Stoffe gelöst werden, die im alkalischen Bereich, d.h. bei pH-Werten über 7,5 in Lösung gehen, so entsteht als Endresultat, das unmittelbar nach dem zweiten Prozeßschritt vorliegt, ein alkaloidreduziertes Raffinat erhalten, das sowohl befreit ist von jeglichen lipophilen Alkaloiden sowie von im sauren Bereich löslichen Alkaloiden.

Das auch als Proteinquark bezeichnete alkaloidreduzierte Raffinat wird vorzugsweise getrocknet und weist nach der Trocknung bei einem pH-Wert von etwa 7 und bei einer Temperatur von 20-30°C eine Proteindispersibilität von 60 -90 % und ein Wasserbindungsvermögen von kleiner 2 g/g auf.

Ebenso kann der Proteinquark durch eine hydrothermische Behandlung zu einem Wasserbinder konfektioniert wird, wobei zur Trocknung des Proteinquarks eine Temperatur von mehr als 65 °C, vorzugsweise mehr als 85°C angewendet wird und der Wassergehalt zu Beginn der Trocknung bei weniger als 85%, vorzugsweise weniger als 75% liegt und das Wasserbindevermögen des zu erhaltenden Wasserbinders größer 4,0 g/g, vorzugsweise größer 5 g/g beträgt.

Das beschriebene Verfahren ist neben der Verarbeitung von Lupinensamen auch für andere protein- und öl- oder stärkehaltige Saaten einsetzbar, wie Raps, Leinsaat oder Leguminosen, insbesondere Sojabohnen, Erdnuß, Erbsen und Ackerbohnen.

Die vorliegende Erfindung ist durch die anhängenden Ansprüche definiert.

### Kurze Beschreibung der Figuren

Die Erfindung wird nachstehend ohne Beschränkung des allgemeinen Erfindungsgedankens anhand von Ausführungsbeispielen unter Bezugnahme auf die Zeichnungen exemplarisch. Es zeigen:

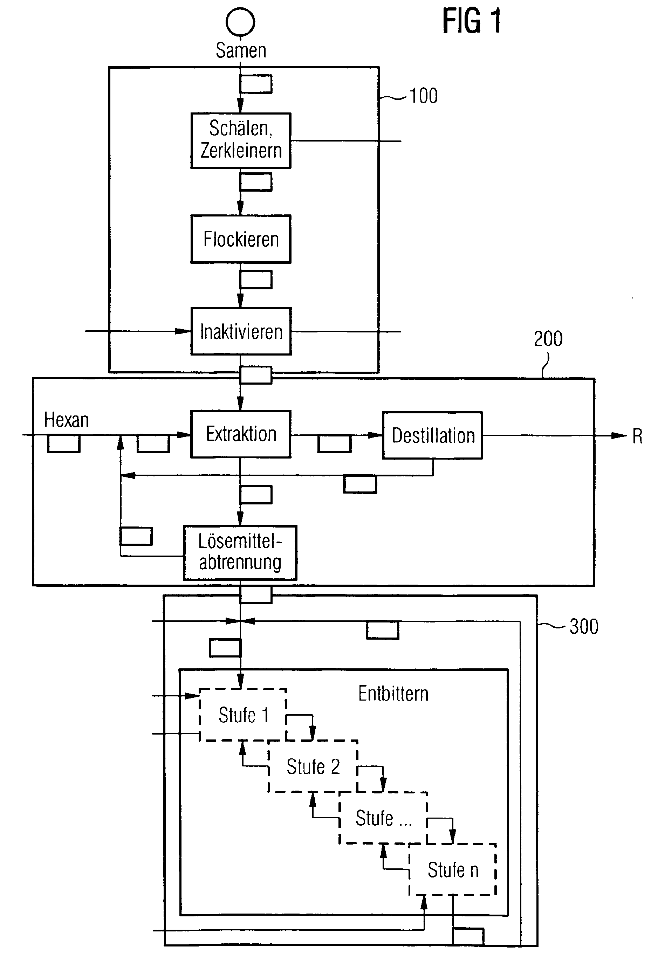

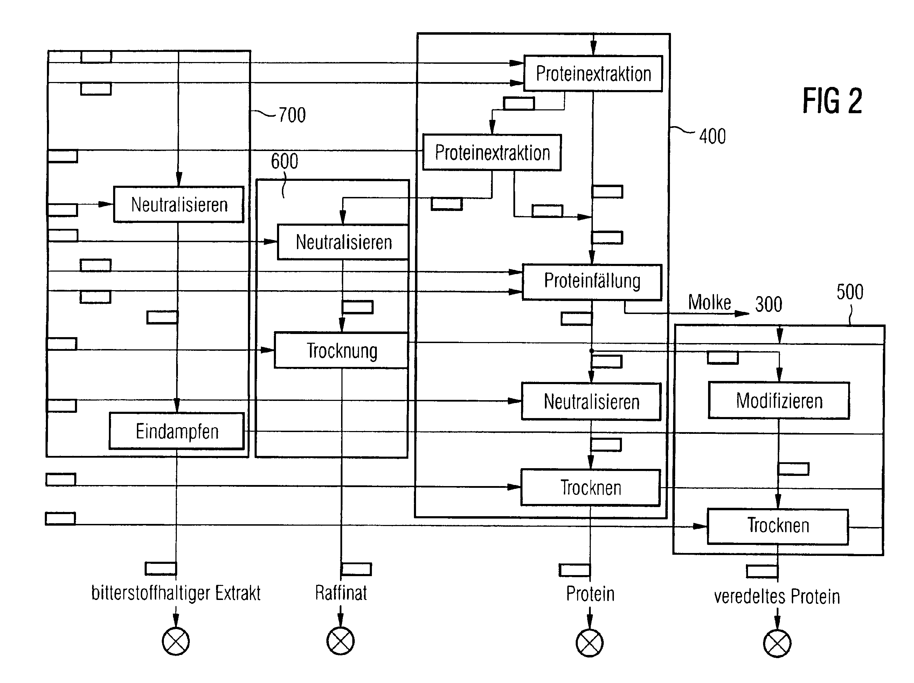

- Fig. 1,2: Prozeßschema zur Entölung und Entbitterung von alkaloidhaltigem Lupinensamen.

### Kurze Beschreibung eines Ausführungsbeispiels

In Fig. 1 sind schematisch die ersten 3 Prozeßschritte in Blockdarstellung dargestellt. Im ersten Prozeßschritt 100 werden die Lupinensamen vorbereitet, im zweiten Prozeßschritt 200 erfolgt die Entölung, im dritten Prozeßschritt 300 findet die Entbitterung statt.

Ausgangspunkt des Verfahrens ist der Rohstoff Lupinensamen, der im Rahmen einer Vorbehandlung zerkleinert und geschält wird. Die auf diese Weise vereinzelten Lupinensamen werden nachfolgend vorzugsweise im Rahmen eines Walzvorganges flockiert, d.h. die Lupinensamen werden zu Samenbruchstücken verpreßt, die typischerweise eine Scheibchendicke zwischen 300 und 400 µm aufweisen. Die für den Walzvorgang eingesetzte Flockierwalz wird gekühlt, um nicht zuletzt den Zerkleinerungsvorgang effektiver zu gestalten.

Nach der Zerkleinerung gelangen die Flocken in eine Wärmepfanne, in der sie einer indirekten Wärmebehandlung unterzogen werden. Durch diesen thermischen Wärmeeintrag werden einerseits zwar die saateigenen Enzyme inaktiviert, andererseits werden die nativen Eigenschaften der Proteine weitestgehend erhalten, wodurch spätere enzymatische Fettoxidationen, die zu ranzigen Geschmacken führen würden, ausgeschlossen werden können. Der in Flockenform gebrachte Lupinensamen, der überdies enzymatisch inaktiviert worden ist, wird nun einem nachfolgenden Entölungsprozeß 200 zugeführt, indem die Flocken Hexan als Lösemittel ausgesetzt werden, wodurch jegliche lipophile Stoffe, wie beispielsweise Triglycerine undRohlecithine, aber insbesondere lipophile Alkaloide, extrahiert werden können. Dies erfolgt typischerweise in einem Band- oder Karussellextrakteur. Die flüssige Phase wird einer Destillation unterzogen, in der zum einen das eingesetzte Lösemittel. Hexan rückgewonnen wird und zur Wiederverwertung zur Verfügung steht, zum anderen kann das extrahierte Rohöl R in einem nicht in der Figur dargestellten weiteren Raffinationsverfahren gereinigt werden. Unter Verwendung von Aceton können weiterhin die Rohlecithine weiter veredelt werden.

Die nach dem Extraktionsvorgang bei der Entölung 200 anfallenden hexannassen, entölten Flocken werden auf möglichst schonende Weise vom Lösemittel abgetrennt, d.h. desolventisiert. Hierbei ist es besonders wesentlich, daß die Proteinlöslichkeit soweit als technisch möglich erhalten bleibt bzw. gezielt verändert werden kann. Unter wasserarmen Bedingungen werden hierzu die hexannassen Flocken desolventisiert, beispielsweise unter Verwendung eines überhitzten Lösemittels.

Die auf diese Weise vorbehandelten, entölten flockenartigen Lupinensamen werden nun in einem Entbitterungsschritt 300 von jeglichen noch in den Lupinensamen enthaltenen Alkaloiden befreit. In an sich bekannter Weise erfolgt die Lupinenentbitterung mehrstufig in einem wässrigen Entbitterungsprozeß, in dem die Alkaloidextraktion kontinuierlich, quasi kontinuierlich oder absatzweise erfolgen kann, wie es in der Darstellung gemäß Fig. 1 gezeigt ist.

Zunächst werden die entölten Flocken in ein saures Medium eingebracht, in dem all jene Substanzen und insbesondere Alkaloide gelöst werden, die in einem sauren Medium löslich sind. Die auf diese Weise behandelten Flocken gelangen anschließend gemäß Fig. 2 zur Proteinextraktion 400, in der die Flocken beispielsweise wiederholt einem alkalischen Medium ausgesetzt werden, in dem eine Fraktionierung zwischen Raffinat und Proteinextrakten erfolgt. Aus dem Proteinextrakt kann in sauren Medien eine Proteinfällung durchgeführt werden. Die bei der Proteinfällung anfallende Molke, deren pH-Wert dem sauren Medium zur Entbitterung der Lupinensamen im Rahmen der Entbitterungsstufe 300 entspricht, kann in einem geschlossenen Kreislauf dem Entbitterungsprozeß 300 wieder zugeführt werden.

Der proteinreduzierte Rückstand wird als Stoffstrom zur Ballaststoffaufbereitung zum Erhalt eines Raffinats im Bereich der Ballaststoffaufbereitung 600, in der die Flocken durch entsprechenden Säureeintrag neutralisiert und anschließend getrocknet. Zum anderen kann der bei der Proteinfällung anfallende Proteinextrakt durch entsprechendes Neutralisieren unter Zugabe alkalischer Medien und nachfolgender Trocknung unmittelbar zum Proteinprodukt führen. Alternativ können Teile des Proteinextraktes im Prozeßschritt 500 durch entsprechende thermische Wärmebehandlung bzw. gezielte Applikation von Hochfrequenzfeldem in ihren funktionellen Eigenschaften modifiziert werden und auf diese Weise nach erfolgter Trocknung zu einem veredelten Proteinprodukt führen.

Neben dem Erhalt der Produkte des Raffinats, das den Ballaststoffen entspricht, sowie den Proteinprodukten, können dem Entbitterungsprozeß auch gezielt Bitterstoffextrakte abgewonnen werden, die im Rahmen einer Bitterextraktaufbereitung 700 beispielsweise als bitterstoffhaltiges Extrakt anfallen. Hierzu werden dem Entbitterungsprozeß 300 gezielt Bitterextrakte entnommen, die nach entsprechenden Behandlungsschritten, wie beispielsweise Feinstoffabtrennung, Neutralisierungs- und Eindampfvorgang zu dem Endprodukt führen.

Es besteht auch die Möglichkeit, dem bitterstoffhaltigen Extrakt mit den in Prozeßschritt 100 abgetrennten Schalen zu vermischen. Das so hergestellte, auf Schalen fixierte Extrakt kann anschließend getrocknet werden.

Der wesentliche Aspekt des vorgestellten erfindungsgemäßen Verfahrens zur Behandlung und Verarbeitung alkaloid-, öl- und proteinhaltiger Lupinensamen besteht darin, daß die im Rahmen des Entwicklungsprozesses sehr schlecht zu extrahierenden lipophilen Alkaloide bereits in einem vorgeschalteten Entölungsvorganges den Lupidsamen entzogen worden sind. Auf diese Weise kann weitgehend vollständig ausgeschlossen werden, daß in den am Ende des Verfahrens gewonnenen Produkten Alkaloide vorhanden sind. Ebenso trägt erfindungsgemäß die Zerkleinerung der Lupinensamen in Flockenform dazu bei, daß zum einen die in den Lupidsamen enthaltenen Bitterstoffe vollständig aus dem Samen entweichen können, zum anderen ist eine technisch leichte Trennbarkeit zwischen flüssiger und fester Phase leicht möglich. Zudem ist das Extrahierverhalten der Alkaloide in wäßrigen Systemen durch die Entfernung der lipophilen Saatbestandteile erheblich verbessert. Dies wirkt sich insbesondere auf die notwendigen Verweilzeiten in den verschiedenen Extraktionsstufen aus.

### BEZUGSZEICHENLISTE

- 100: Samenvorbehandlung, Flockierung, Inaktivierung
- 200: Entölung
- 300: Entbitterung
- 400: Proteingewinnung
- 500: Proteinveredlung
- 600: Raffinataufbereitung
- 700: Bitterstoffaufbereitung

## Patentansprüche

1. Verfahren zur Behandlung und Verarbeitung alkaloid-, öl- und proteinhaltiger Lupinensamen zur Gewinnung von Produkten aus den Lupinensamen mittels gezielter Fraktionierung, wobei der zerkleinerte Lupinensamen mittels Eintrag eines Lösungsmittels entölt und der Rückstand unter Zusatz von Säure von im Sauren löslichen Stoffen, vorzugsweise von Alkaloiden, abgereichert wird,
**dadurch gekennzeichnet, daß** die Lupinensamen in scheibchenförmige Flocken derart zerkleinert und/oder verformt werden, daß die Zerkleinerung der Pflanzensamen nach erfolgtem Vorbrechen der den Pflanzensamen enthaltenen geschälten oder ungeschälten Saat mittels einer gekühlten Flockierwalze durchgeführt wird, anschließend werden die Flocken durch indirekten Wärmeeintrag unter weitgehendem Ausschluß von Wasser erhitzt und danach entölt und nach der Entölung erfolgt die Abreicherung der Flocken von im Sauren löslichen Stoffen, vorzugsweise von Alkaloiden, durch eine wäßrige Extraktion, wobei ein alkaloidreduziertes Raffinat und ein wäßriges Extrakt erhalten werden.

2. Verfahren nach Anspruch 1,
**dadurch gekennzeichnet, daß** die Zerkleinerung der Pflanzensamen nach erfolgtem Vorbrechen der den Pflanzensamen enthaltenen geschälten oder ungeschälten Saat mittels einer Flockierwalze durchgeführt wird, wobei die Flockierwalze gekühlt wird.

3. Verfahren nach Anspruch 1 oder 2,
**dadurch gekennzeichnet, daß** die Lupinensamen vor der Zerkleinerung und/oder Verformung nach Form und Größe sortiert und nachfolgend geschält werden.

4. Verfahren nach einem der Ansprüche 1 bis 3,
**dadurch gekennzeichnet, daß** der Schälvorgang nach einem sogenannten Kaltverfahren erfolgt, bei dem die Lupinensamen halbiert und von den Schalen getrennt werden.

5. Verfahren nach einem der Ansprüche 1 bis 4,
**dadurch gekennzeichnet, daß** die Flockierwalz auf eine Temperatur gekühlt wird, die unter der Denaturierungstemperatur der Lupinenproteine liegt, vorzugsweise unter 35°C.

6. Verfahren nach einem der Ansprüche 1 bis 5,
**dadurch gekennzeichnet, daß** die scheibchenförmigen Flocken eine Scheibchendicke von weniger 1 mm, vorzugsweise 200-400 µm aufweisen.

7. Verfahren nach einem der Ansprüche 1 bis 6,
**dadurch gekennzeichnet, daß** der indirekte Wärmeeintrag mittels einer Wärmepfanne erfolgt.

8. Verfahren nach einem der Ansprüche 1 bis 7,
**dadurch gekennzeichnet, daß** durch den indirekten Wärmeeintrag saateigene Enzyme inaktiviert werden, wobei die Proteine ihre nativen Eigenschaften weitestgehend beibehalten.

9. Verfahren nach einem der Ansprüche 1 bis 8
**dadurch gekennzeichnet, daß** bei der Entölung Ethanol als Lösemittel eingesetzt wird.

10. Verfahren nach einem der Ansprüche 1 bis 8,
**dadurch gekennzeichnet, daß** als Lösemittel zur Entölung der scheibchenförmigen Flocken technisches Hexan, Pentan, Hexan, Heptan oder überkritisches CO₂ verwendet wird.

11. Verfahren nach Anspruch 9 oder 10,
**dadurch gekennzeichnet, daß** die Entölung mit einer mechanischen Ölabtrennung mit Pressen oder mit einer Entölung mit Ethanol-Wasser-Gemischen unter Anwendung von Zentrifugaltechniken kombiniert wird.

12. Verfahren nach einem der Ansprüche 1 bis 11,
**dadurch gekennzeichnet, daß** die entölten scheibchenförmigen Flocken desolventisiert werden.

13. Verfahren nach Anspruch 12,
**dadurch gekennzeichnet, daß** die Desolventisierung unter wasserarmen oder wasserfreien Bedingungen durchgeführt wird.

14. Verfahren nach Anspruch 12 oder 13,
**dadurch gekennzeichnet, daß** die Desolventisierung mit einem überhitzten Lösemittel durchgeführt wird, das vorzugsweise Hexan oder technisches Hexan ist.

15. Verfahren nach einem der Ansprüche 1 bis 14,
**dadurch gekennzeichnet, daß** der Ölgehalt in den entölten und desolventisierten Flocken bezogen auf den Trockensubstanzgehalt kleiner 2%, vorzugsweise kleiner 1 % beträgt.

16. Verfahren nach einem der Ansprüche 1 bis 15,
**dadurch gekennzeichnet, daß** die entölten und desolventisierten Flocken einem Entbitterungsprozeß zugeführt werden, der folgende zwei Verfahrenstufen vorsieht:
- in einer ersten Verfahrensstufe werden die Flocken in ein wässrig saures Medium eingebracht zum Abtrennen von im sauren Medium löslichen Substanzen zum Erhalt eines wäßrigen sauren Extraktes sowie eines sauerunlöslichen Raffinates,
- in einer zweiten Verfahrensstufe wird das sauerunlösliche Raffinat in ein wässrig alkalisches Medium eingebracht zum Erhalt von wäßrigen Extrakten sowie von alkalisch und sauerunlöslichen Raffinaten.

17. Verfahren nach einem der Ansprüche 1 bis 16,
**dadurch gekennzeichnet, daß** den entölten und desolventisierten Flocken Schalen zugegeben werden, die zusammen mit den Flocken einem Entbitterungsprozeß zugeführt werden, der folgende zwei Verfahrenstufen vorsieht:
- in einer ersten Verfahrensstufe werden die Flocken mit den Schalen in ein wässrig saures Medium eingebracht zum Abtrennen von im sauren Medium löslichen Substanzen zum Erhalt eines wäßrigen sauren Extraktes sowie eines sauerunlöslichen Raffinates,
- in einer zweiten Verfahrensstufe wird das sauerunlösliche Raffinat in ein wässrig alkalisches Medium eingebracht zum Erhalt von wäßrigen Extrakten sowie von alkalisch und sauerunlöslichen Raffinaten.

18. Verfahren nach Anspruch 17,
**dadurch gekennzeichnet, daß** die Schalen vor Zugabe zu den Flocken gemahlen werden, vorzugsweise auf eine Partikelgrößer kleiner 5 mm.

19. Verfahren nach einem der Ansprüche 16 bis 18,
**dadurch gekennzeichnet, daß** das wässrig saure Medium in der ersten Verfahrensstufe eine Temperatur kleiner Raumtemperatur aufweist.

20. Verfahren nach einem der Ansprüche 16 bis 19,
**dadurch gekennzeichnet, daß** die Abtrennung des wäßrigen Extraktes von dem sauerunlöslichen Raffinats zentrifugal mittels eines Dekanters durchgeführt wird, und daß der Dekanter gekühlt und im Bereich des Feststofffängers mit Wasser oder dem Extrakt gespült wird.

21. Verfahren nach Anspruch 16 oder 17,
**dadurch gekennzeichnet, daß** im zweiten Verfahrensschritt die Temperatur bei der Extraktion im wäßrigen alkalischen Medium höher als Raumtemperatur ist , vorzugsweise zwischen 35 °C und 45 °C liegt.

22. Verfahren nach einem der Ansprüche 16 bis 21,
**dadurch gekennzeichnet, daß** die erste Verfahrensstufe in einem mehrstufig, wässrig saurem Prozeß erfolgt,
daß in einem Prozeßschritt zur Einstellung eines Verhältnisses zwischen sauerunlöslichem Raffinat und wäßrigem Extrakt von kleiner als 10:1 ein Teil des wäßrigen Extraktes des unmittelbar darauffolgenden Prozeßschrittes zugemischt wird.

23. Verfahren nach Anspruch 22,
**dadurch gekennzeichnet, daß** zum Einstellen eines Verhältnisses zwischen sauerunlöslichem Raffinat und wäßrigem Extrakt von größer als 10:1 innerhalb des unmittelbar darauffolgenden Prozeßschrittes ein Teil dieses wäßrigen Extraktes ausgeschleust wird.

24. Verfahren nach einem der Ansprüche 16 bis 23,
**dadurch gekennzeichnet, daß** zum Erhalt eines Produktes aus dem wäßrigen sauren Extrakt eine Feinstoffabtrennung per Seperator durchgeführt wird, so daß ein Produkt erhalten wird, das einen Trockensubstanzgehalt von wenigstens 10%, vorzugsweise größer 16% aufweist, einen Proteingehalt in der Trockensubstanz von größer 70%, vorzugsweise größer 85% und einen Alkaloidgehalt von kleiner 0,5% vorzugsweise 0, 1 % in der Trockensubstanz aufweist.

25. Verfahren nach Anspruch 24,
**dadurch gekennzeichnet, daß** die Feinstoffabtrennung per Seperator innerhalb der ersten Verfahrensstufe stattfindet, die mehrere, wässrig saure Prozeßschritte umfaßt, und daß die Feinstoffabtrennung nach dem ersten oder einem diesem nachgeordneten Prozeßschritt erfolgt.

26. Verfahren nach einem der Ansprüche 16 bis 18,
**dadurch gekennzeichnet, daß** der wäßrige Extraktionsprozeß einen geschlossenen Kreislauf aufweist, der folgende Prozeßstufen vorsieht:
- die entölten Flocken werden bei einem pH-Wert von ca. 3,5 - 5,5 zur Abscheidung von im Sauren löslichen Stoffen, vorzugsweise von Alkaloiden in Wasser suspendiert,
- zur Proteingewinnung werden die suspendierten Flocken, der sogenannte Proteinextrakt, mit einer Lauge bei einem pH-Wert zwischen 7,0 - 8,5 vermengt,
- die Suspension wird mittels eines Dekanters in Raffinat und Proteinextrakt getrennt,
- dem Proteinextrakt wird wieder ein saures Medium zugeführt, so daß eine Fraktionierung von Molke und Proteinquark erhalten wird, und
- die Molke wird vollständig wieder den vorextrahierten Flocken bei einem pH- Wert von ca. 3,5 - 5,5 zugeführt.

27. Verfahren nach Anspruch 26,
**dadurch gekennzeichnet, daß** die Proteingewinnung in mehreren pH-Stufen erfolgt und so eine Proteinfraktionierung stattfindet.

28. Verfahren nach einem der Ansprüche 26 und 27,
**dadurch gekennzeichnet, daß** das Raffinat einen Proteingehalt kleiner 20% in Trockensubstanz aufweist und der Ballaststoffgehalt größer 60% vorzugsweise 70% und der Gehalt an löslichen Kohlenhydraten unter 5 % vorzugsweise unter 1 % beträgt.

29. Verfahren nach Anspruch 26,
**dadurch gekennzeichnet**, die Trennung von Molke und Proteinquark, der mehr als 85 % Protein in der Trockensubstanz, vorzugsweise mehr als 90 % Protein in der Trockensubstanz aufweist, mittels eines Dekanters erfolgt.

30. Verfahren nach Anspruch 29,
**dadurch gekennzeichnet, daß** die gewonnene Molke mit einem Separator nachgeklärt wird, anschließend thermisch behandelt und danach ein zweites mal in einem Separator geklärt wird.

31. Verfahren nach Anspruch 30,
**dadurch gekennzeichnet, daß** die zweifach geklärte Molke dem Prozeß wieder zugeführt wird, wobei der gewonnene Feststoff bei der ersten Separation im Proteinstrang weiterverarbeitet wird und der bei der zweiten Separation gewonnene Feststoff ausgeschleust wird.

32. Verfahren nach Anspruch 26,
**dadurch gekennzeichnet, daß** das Raffinat nach oder während einer Trocknungsphase nach Partikelgrößen in mindestens 2, vorzugsweise 3 Fraktionen fraktioniert wird.

33. Verfahren nach Anspruch 26,
**dadurch gekennzeichnet, daß** der Proteinquark nach Trocknung bei pH-Wert von etwa 7 und einer Temperatur von 20-30°C eine Proteindispersibilität (PDI = Protein Dispersibility Index) von 60-90% und ein Wasserbindungsvermögen von kleiner 2 g/g aufweist.

34. Verfahren nach Anspruch 26, 27, 29 und 31,
**dadurch gekennzeichnet, daß** der Proteinquark durch eine hydrothermische Behandlung zu einem Wasserbinder konfektioniert wird, wobei zur Trocknung des Proteinquarks eine Temperatur von mehr als 65 °C, vorzugsweise mehr als 85°C angewendet wird und der Wassergehalt zu Beginn der Trocknung bei weniger als 85%, vorzugsweise weniger als 75% liegt und das Wasserbindevermögen des erhaltenen Wasserbinders größer 4,0 g/g, vorzugsweise größer 5,0 g/g beträgt.

35. Verfahren nach einem der Ansprüche 1 bis 34,
**dadurch gekennzeichnet, daß** aus Ballaststoffen und den gewonnenen Proteinisolaten Mischungen hergestellt werden, die einen Proteingehalt zwischen 20 und 70 %, einen Ballaststoffgehalt zwischen 30 und 80 % aufweisen und ein Wasserbindevermögen größer 5 g/g, vorzugsweise größer 7 g/g aufweisen.

36. Verfahren nach einem der Ansprüche 1 bis 35,
**dadurch gekennzeichnet, daß** in diesem Verfahrten anstelle Lupinen auch andere protein- und öl- oder stärkehaltige Saaten eingesetzt werden, wie Raps, Leinsaat oder Leguminosen, insbesondere Sojabohnen, Erdnuß, Erbsen und Ackerbohnen.

## Claims

1. Method for treating and processing alkaloid-, oil-, and protein-containing lupin seeds for extraction of products from the lupin seeds by targeted fractionation, in which comminuted lupin seeds are de-oiled by introducing a solvent and the residue is depleted of acid-soluble substances, preferably of alkaloids, by adding acids, **characterised in that** the lupin seeds are comminuted and/or shaped to form discoid flakes, and **in that** after pre-crushing of the shelled or non-shelled seeds, comminution of the seeds is carried out by a cooled flaking roller, then the flakes are heated by an indirect introduction of heat with the substantial exclusion of water and then de-oiled and, after de-oiling, depletion of the flakes of acid-soluble substances, preferably of alkaloids, takes place through aqueous extraction, a refined product with a reduced alkaloid level and an aqueous extract being obtained.

2. Method according to claim 1, **characterised in that** after pre-crushing of the shelled or non-shelled seeds, comminution of the seeds is carried out by a flaking roller, with the flaking roller being cooled.

3. Method according to either claim 1 or claim 2, **characterised in that** the seeds are screened by shape and size prior to comminution and/or shaping and are subsequently shelled.

4. Method according to any one of claims 1 to 3, **characterised in that** the shelling is carried out with what is known as a cold method, in which the lupin seeds are halved and separated from the shells.

5. Method according to any one of claims 1 to 4, **characterised in that** the flaking roller is cooled to a temperature lower than the denaturation temperature of the lupin proteins, preferably to less than 35 °C.

6. Method according to any one of claims 1 to 5, **characterised in that** the discoid flakes have a platelet thickness of less than 1 mm, preferably 200-400 µm.

7. Method according to any one of claims 1 to 6, **characterised in that** the indirect introduction of heat is carried out by a heat pan.

8. Method according to any one of claims 1 to 7, **characterised in that** the indirect introduction of heat deactivates enzymes inherent in the seeds, whereas the proteins substantially retain their native properties.

9. Method according to any one of claims 1 to 8, **characterised in that** ethanol is used as a solvent during the de-oiling.

10. Method according to any one of claims 1 to 8, **characterised in that** industrial hexane, pentane, hexane, heptane or supercritical CO₂ is used as a solvent for de-oiling the discoid flakes.

11. Method according to either claim 9 or claim 10, **characterised in that** de-oiling is combined with a mechanical oil separation process using presses or with a de-oiling using an ethanol/water mixture in combination with centrifuging.

12. Method according to any one of claims 1 to 11, **characterised in that** solvent is removed from the de-oiled discoid flakes.

13. Method according to claim 12, **characterised in that** the removal of the solvent is carried out with minimal water or with no water.

14. Method according to either claim 12 or claim 13, **characterised in that** the removal of the solvent is carried out with a superheated solvent which is preferably hexane or industrial hexane.

15. Method according to any one of claims 1 to 14, **characterised in that** the oil content of the flakes which have been de-oiled and de-solvented is less than 2%, preferably less than 1%, based on the dry substance content.

16. Method according to any one of claims 1 to 15, **characterised in that** the flakes which have been de-oiled and de-solvented are passed to a disembitterment process comprising the following two method steps:
in a first method step, the flakes are introduced into an aqueous acid medium in order to isolate substances soluble in the acid medium to provide an aqueous acid extract and a refined acid-insoluble product;
in a second method step, the refined acid-insoluble product is introduced into an aqueous alkaline medium to obtain aqueous extracts and alkaline refined acid-insoluble products.

17. Method according to any one of claims 1 to 16, **characterised in that** shells are added to flakes which have been de-oiled and de-solvented, which shells are passed, together with the flakes, to a disembitterment process comprising the following two method steps:
in a first method step, the flakes are introduced along with the shells into an aqueous acid medium in order to isolate substances soluble in the acid medium to provide an aqueous acid extract and a refined acid-insoluble product,
in a second method step, the refined acid-insoluble product is introduced into an aqueous alkaline medium to provide aqueous extracts and alkaline refined acid-insoluble products.

18. Method according to claim 17, **characterised** the shells are ground, preferably to a particle size of less than 5 mm, before being added to the flakes.

19. Method according to any one of claims 16 to 18, **characterised in that** the aqueous acid medium has a temperature lower than room temperature in the first method step.

20. Method according to any one of claims 16 to 19, **characterised in that** the aqueous acid extract is isolated from the refined acid-insoluble product by centrifuging in a decanter, and **in that** the decanter is cooled and flushed with water or the extract in the region of the solids accumulator.

21. Method according to either claim 16 or claim 17, **characterised in that** in the second method step, the temperature for the extraction in the aqueous alkaline medium is higher than room temperature, preferably between 35 °C and 45 °C.

22. Method according to any one of claims 16 to 21, **characterised in that** the first method step takes place in a multi-stage aqueous acid process, and **in that** in a process step for adjusting a ratio between the refined acid-insoluble product and the aqueous extract to less than 10:1, a part of the aqueous extract from the directly following process step is added.

23. Method according to claim 22, **characterised in that** in order to adjust a ratio, between the refined acid-insoluble product and an aqueous extract, greater than 10:1 within the following process step, a part of this aqueous extract is discharged.

24. Method according to any one of claims 16 to 23, **characterised in that** in order to obtain a product from the aqueous acid extract a fine substance fraction is passed through a separator, so that a product is obtained having a dry substance content of at least 10%, preferably greater than 16%, a protein content in the dry substance greater than 70%, preferably greater than 85%, and an alkaloid content in the dry substance of less than 0.5%, preferably 0.1%

25. Method according to claim 24, **characterised in that** the substances are isolated by means of a separator in a first method step comprising a plurality of aqueous acid process steps, and **in that** the substances are isolated after the first process step or a subsequent process step.

26. Method according to any one of claims 16 to 18, **characterised in that** the aqueous extraction process includes a closed circuit which performs the following process stages:
the de-oiled flakes are suspended in water at a pH of approximately 3.5 to 5.5 to separate acid-soluble substances, preferably alkaloids,
in order to extract protein, the suspended flakes and what is known as the protein extract are mixed with lye at a pH of between 7.0 and 8.5,
the suspension is separated, by a decanter, into the refined product and the protein extract,
an acid medium is added to the protein extract to achieve fractionation of whey and protein curds, and
the whole of the whey is added to the pre-extracted flakes at a pH of approximately 3.5 to 5.5.

27. Method according to claim 26, **characterised in that** the protein extraction is carried out at a plurality of pH stages, and protein fractionation thus takes place.

28. Method according to either claim 26 or claim 27, **characterised in that** the refined product has a protein content of less than 20% in the dry substance, a roughage content greater than 60%, preferably 70%, and a soluble carbohydrate content of less than 5%, preferably less than 1%.

29. Method according to claim 26, **characterised in that** the whey and the protein curd, which contains more than 85% of protein in the dry substance, preferably more than 90 % in the dry substance, are separated using a decanter.

30. Method according to claim 29, **characterised in that** the whey obtained is clarified by means of a separator, is then thermally treated and afterwards clarified in a separator for a second time.

31. Method according to claim 30, **characterised in that** the twice clarified whey is introduced into the process again, with the solids obtained in the first separation being subjected to further processing in a protein string and the solids obtained in the second separation being discharged.

32. Method according to claim 26, **characterised in that** the refined product is fractionated by particle sizes into at least 2, preferably 3 fractions during or after a drying process.

33. Method according to claim 26, **characterised in that** the protein curds, after being dried at a pH of about 7 and a temperature of 20 to 30° C, have a protein dispersibility index (PDI) of 60 to 90% and a water-absorption capacity of less than 2 g/g.

34. Method according to any one of claims 26, 27, 29 and 31, **characterised in that** the protein curds are fabricated via a hydrothermal treatment to form a water binding product, wherein a temperature higher than 65 °C, preferably higher than 85 °C, is applied for drying the protein curds and the water content at the beginning of the drying is less than 85%, preferably less than 75%, and the water absorption capacity of the water binding product obtained is greater than 4.0 g/g, preferably greater than 5.0 g/g.

35. Method according to claim 1, **characterised in that** from roughage and the protein isolates obtained, mixtures are produced, having protein contents between 20 and 70%, a roughage content of between 30 and 80%, and a water absorption capacity greater than 5 g/g, preferably greater than 7 g/g.

36. Method according to any one of claims 1 to 35, **characterised in that** other protein and oil or starch-containing seeds, such as rapeseed, flax seed, or legumes, in particular soy beans, peanuts, peas and horse beans, can be used in this method instead of lupin seeds.

## Revendications

1. Procédé de traitement et de transformation de graines de lupin renfermant des alcaloïdes, de l'huile et des protéines en vue de l'obtention de produits issus, mettant en oeuvre un fractionnement ciblé, les graines de lupin broyées étant déshuilées par introduction d'un solvant et le résidu étant appauvri, par apport d'acide, en substances, de préférence des alcaloïdes, solubles dans les acides,
**caractérisé en ce que**
les graines de lupin sont broyées et/ou façonnées en flocons en forme de disques de manière que le broyage s'effectue à l'aide d'un rouleau de floconnage refroidi, après un préconcassage des semences décortiquées ou non décortiquées contenant les graines, puis les flocons sont chauffés par introduction indirecte de chaleur, en excluant dans une large mesure toute présence d'eau, puis après le déshuilage, les flocons sont appauvris en substances solubles dans les acides, de préférence des alcaloïdes, par extraction aqueuse, ce qui permet d'obtenir un produit raffiné à teneur réduite en alcaloïdes et un extrait aqueux.

2. Procédé selon la revendication 1,
**caractérisé en ce que**
le broyage des graines est effectué à l'aide d'un rouleau de floconnage, après le préconcassage des semences décortiquées ou non décortiquées, contenant les graines, le rouleau de floconnage étant refroidi.

3. Procédé selon la revendication 1 ou 2,
**caractérisé en ce que**
les graines de lupin sont triées selon leur forme et leur taille, puis décortiquées avant d'être broyées et/ou façonnées.

4. Procédé selon l'une des revendications 1 à 3,
**caractérisé en ce que**
le décorticage s'effectue selon un procédé à froid dans lequel les graines de lupin sont coupées en deux et séparées de leurs enveloppes.

5. Procédé selon l'une des revendications 1 à 4,
**caractérisé en ce que**
le rouleau de floconnage est refroidi à une température inférieure à la température de dénaturation des protéines de lupin, de préférence inférieure à 35 °C.

6. Procédé selon l'une des revendications 1 à 5,
**caractérisé en ce que**
les flocons en forme de disques présentent une épaisseur inférieure à 1 mm, de préférence de 200 à 400 µm.

7. Procédé selon l'une des revendications 1 à 6,
**caractérisé en ce que**
l'introduction indirecte de chaleur s'effectue au moyen d'une cuve chauffante.

8. Procédé selon l'une des revendications 1 à 7,
**caractérisé en ce que**
l'introduction indirecte de chaleur permet d'inactiver les enzymes propres aux semences, les protéines conservant dans une large mesure leurs propriétés originales.

9. Procédé selon l'une des revendications 1 à 8,
**caractérisé en ce que**
le solvant utilisé lors du déshuilage est de l'éthanol.

10. Procédé selon l'une des revendications 1 à 8,
**caractérisé en ce que**
le solvant utilisé pour le déshuilage des flocons en forme de disques consiste en de l'hexane industriel, du pentane, de l'hexane, de l'heptane ou du CO₂ supercritique.

11. Procédé selon la revendication 9 ou 10,
**caractérisé en ce que**
le déshuilage est combiné à une séparation mécanique de l'huile par pression ou à un déshuilage avec des mélanges d'éthanol et d'eau mettant en oeuvre des techniques centrifuges.

12. Procédé selon l'une des revendications 1 à 11,
**caractérisé en ce que**
les flocons déshuilés en forme de disques sont désolvatés.

13. Procédé selon la revendication 12,
**caractérisé en ce que**
la désolvatation s'effectue dans des conditions faiblement aqueuses ou anhydres.

14. Procédé selon la revendication 12 ou 13,
**caractérisé en ce que**
la désolvatation est conduite avec un solvant surchauffé qui est de préférence de l'hexane ou de l'hexane technique.

15. Procédé selon l'une des revendications 1 à 14,
**caractérisé en ce que**
la teneur en huile des flocons déshuilés et désolvatés, par rapport à la teneur en substances sèches, est inférieure à 2 %, de préférence inférieure à 1 %.

16. Procédé selon l'une des revendications 1 à 15,
**caractérisé en ce que**
les flocons déshuilés et désolvatés subissent un processus d'élimination de l'amertume prévoyant les deux étapes de procédé suivantes :
- une première phase du procédé, on introduit les flocons dans un milieu aqueux acide afin de séparer les substances solubles dans le milieu acide pour obtenir un extrait aqueux acide ainsi qu'un produit raffiné insoluble dans les acides,
- dans une deuxième phase du procédé, on introduit le produit raffiné insoluble dans les acides dans un milieu aqueux alcalin pour obtenir des extraits aqueux ainsi que des produits raffinés alcalins et insolubles dans les acides.

17. Procédé selon l'une des revendications 1 à 16,
**caractérisé en ce qu'**
on ajoute aux flocons déshuilés et désolvatés des enveloppes qui, conjointement aux flocons, subissent un processus d'élimination de l'amertume prévoyant les deux étapes de procédé suivantes :
- dans une première phase du procédé, on introduit les flocons et les enveloppes dans un milieu aqueux acide afin de séparer les substances solubles dans le milieu acide pour obtenir un extrait aqueux acide ainsi qu'un produit raffiné insoluble dans les acides,
- dans une deuxième phase du procédé, on introduit le produit raffiné insoluble dans les acides dans un milieu aqueux alcalin pour obtenir des extraits aqueux ainsi que des produits raffinés alcalins et insolubles dans les acides.

18. Procédé selon la revendication 17,
**caractérisé en ce que**
les enveloppes sont moulues avant d'être ajoutées aux flocons, en étant réduites de préférence à une taille particulaire inférieure à 5 mm.

19. Procédé selon l'une des revendications 16 à 18,
**caractérisé en ce que**
le milieu aqueux acide de la première phase du procédé présente une température inférieure à la température ambiante.

20. Procédé selon l'une des revendications 16 à 19,
**caractérisé en ce que**
la séparation entre l'extrait aqueux et le produit raffiné insoluble dans les acides est réalisé par voie centrifuge au moyen d'un décanteur, et le décanteur est refroidi puis rincé, dans la zone du capteur de matières solides, avec de l'eau ou de l'extrait.

21. Procédé selon la revendication 16 ou 17,
**caractérisé en ce que**
la température mise en oeuvre dans la deuxième étape du procédé pour l'extraction en milieu aqueux alcalin est supérieure à la température ambiante, en étant de préférence comprise entre 35 °C et 45 °C.

22. Procédé selon l'une des revendications 16 à 21,
**caractérisé en ce que**
la première phase du procédé s'effectue dans un processus aqueux acide à plusieurs étages, et dans une première étape du processus, pour ajuster un rapport entre le produit raffiné insoluble dans les acides et l'extrait aqueux qui soit inférieur à 10 : 1, on ajoute une partie de l'extrait aqueux de l'étape de processus immédiatement consécutive.

23. Procédé selon la revendication 22,
**caractérisé en ce que**
pour ajuster un rapport entre le produit raffiné insoluble dans les acides et l'extrait aqueux qui soit supérieur à 10 : 1, on évacue dans l'étape de processus immédiatement consécutive une partie de cet extrait aqueux.

24. Procédé selon l'une des revendications 16 à 23,
**caractérisé en ce que**
pour obtenir un produit à partir de l'extrait aqueux acide, on réalise une séparation des fines par séparateur, de sorte qu'on obtient un produit dont la teneur en substance sèche est d'au moins 10 %, de préférence supérieure à 16 %, la teneur en protéines dans la substance sèche est supérieure à 70 %, de préférence supérieure à 85 % et la teneur en alcaloïdes est inférieure à 0,5 %, de préférence à 0,1 % dans la substance sèche.

25. Procédé selon la revendication 24,
**caractérisé en ce que**
la séparation des fines par séparateur est effectuée lors de la première phase du procédé, laquelle comprend plusieurs étapes de processus aqueuses acides et la séparation des fines est effectuée après la première étape de processus ou après une étape successive à celle-ci.

26. Procédé selon l'une des revendications 16 à 18,
**caractérisé en ce que**
le processus d'extraction aqueuse présente un circuit fermé qui prévoit les étapes suivantes :
- les flocons déshuilés sont mis en suspension dans de l'eau à une valeur de pH d'environ 3,5-5,5 pour séparer les substances, de préférence les alcaloïdes, solubles dans les acides,
- en vue de la production des protéines, on mélange les flocons mis en suspension, c'est-à-dire l'extrait protéique, à une lessive dont la valeur de pH est comprise entre 7,0 et 8,5,
- on sépare la suspension à l'aide d'un décanteur en un produit raffiné et un extrait protéique,
- on apporte à nouveau à l'extrait protéique un milieu acide de façon à produire un fractionnement entre le sérum et le caillé protéique, et
- on apporte à nouveau complètement, aux flocons pré-extraits, le sérum à une valeur de pH d'environ 3,5-5,5.

27. Procédé selon la revendication 26,
**caractérisé en ce que**
la production des protéines s'effectue en plusieurs paliers de pH et il se produit ainsi un fractionnement des protéines.

28. Procédé selon l'une des revendications 26 et 27,
**caractérisé en ce que**
le produit raffiné présente une teneur en protéines inférieure à 20 % dans la substance sèche et la teneur en fibres est supérieure à 60 %, de préférence à 70 % et la teneur en hydrates de carbone solubles est inférieure à 5 %, de préférence inférieure à 1 %.

29. Procédé selon la revendication 26,
**caractérisé en ce que**
la séparation entre le sérum et le caillé protéique, qui présente plus de 85 % de protéines dans la substance sèche, de préférence plus de 90 %, s'effectue à l'aide d'un décanteur.

30. Procédé selon la revendication 29,
**caractérisé en ce que**
le sérum produit est clarifié au moyen d'un séparateur, puis traité thermiquement et ensuite clarifié une deuxième fois dans un séparateur.

31. Procédé selon la revendication 30,
**caractérisé en ce que**
le sérum deux fois clarifié est réintroduit dans le processus, dans lequel la matière solide produite lors de la première séparation est retransformée en filament protéique et la matière solide produite lors de la deuxième séparation est évacuée.

32. Procédé selon la revendication 26,
**caractérisé en ce que**
le produit raffiné est fractionné selon les tailles particulaires en au moins 2 fractions, de préférence 3 fractions, après ou pendant une phase de séchage.

33. Procédé selon la revendication 26,
**caractérisé en ce que**
le caillé protéique présente, après séchage, à une valeur de pH d'environ 7 et à une température de 20°C à 30 °C, une dispersibilité des protéines (PDI = Protein Dispersibility Index) de 60 % à 90 % et une capacité de liaison d'eau inférieure à 2 g/g.

34. Procédé selon les revendications 26, 27, 29 et 31,
**caractérisé en ce que**
le caillé protéique est confectionné en agent hydrophile par traitement hydrothermique, le séchage du caillé protéique étant réalisé à une température supérieure à 65 °C, de préférence supérieure à 85 °C, la teneur en eau au début du séchage étant inférieure à 85 %, de préférence inférieure à 75 % et la capacité en eau de l'agent hydrophile obtenu étant supérieure à 4,0 g/g, de préférence supérieure à 5,0 g/g.

35. Procédé selon l'une des revendications 1 à 34,
**caractérisé en ce qu'**
on réalise des mélanges à partir de fibres et des isolats protéiques obtenus qui présentent une teneur en protéines comprise entre 20 % et 70 %, une teneur en fibres comprise entre 30 % et 80 % et une capacité de liaison d'eau supérieure à 5 g/g, de préférence supérieure à 7 g/g.

36. Procédé selon l'une des revendications 1 à 35,
**caractérisé en ce que**
ce procédé peut mettre en oeuvre, à la place des lupins, d'autres semences renfermant des protéines et de l'huile ou de l'amidon, telles que le colza, les semences de lin ou les légumineuses, notamment le soja, les arachides, les pois et les fèves.
